# FASCICULE DE BREVET EUROPEEN

(11) **EP 3 768 995 B1**
(45) Date de publication et mention de la délivrance du brevet: **30.03.2022**
(21) Numéro de dépôt: 19711149.5
(22) Date de dépôt: 13.02.2019
(51) Int. Cl.: F16H 59/72, F16H 61/12, F16H 61/20, F16H 63/50, F16H 59/18, F16H 59/54, F16H 63/42

(54) **PROCEDE DE PROTECTION THERMIQUE D'UNE BOITE DE VITESSE PILOTEE POUR UN VEHICULE AUTOMOBILE**
VERFAHREN ZUM THERMISCHEN SCHUTZ EINES AUTOMATISIERTEN GETRIEBES EINES KRAFTFAHRZEUGS
METHOD FOR THERMAL PROTECTION OF AN AUTOMATED GEARBOX OF A MOTOR VEHICLE

(30) Priorité: 23.03.2018 FR 1852519
(43) Date de publication de la demande: 27.01.2021
(73) Titulaire: PSA Automobiles SA, 78300 Poissy (FR)
(72) Inventeur: BALENGHIEN, Olivier, 93390 Clichy sous Bois (FR); CHEMZARI, Abla, 95610 Eragny (FR)
(86) Numéro de dépôt international: PCT/FR2019/050314
(87) Numéro de publication internationale: WO 2019/180334

(56) Documents cités:
- DE-A1-102006 051 481
- DE-A1-102011 009 084
- US-B2- 8 827 868

## Description

Le domaine de l'invention concerne un procédé de protection thermique d'une boite de vitesses pour un véhicule automobile.

Généralement, un véhicule automobile comporte un moteur thermique, une boite de vitesses et un dispositif d'embrayage reliant l'arbre de sortie du moteur thermique et un arbre d'entrée de la boite de vitesses. Comme cela est bien connu, lors du roulage la boite de vitesses et le dispositif d'embrayage sont sollicités thermiquement faisant alors monter en température l'huile de lubrification. Pour éviter une détérioration du comportement et une dégradation des mécanismes, il est nécessaire de prévenir la montée en température. En effet, si la température de l'huile à l'intérieur du carter de la boite de vitesses et du dispositif d'embrayage dépasse un seuil critique, l'huile ne remplit plus son rôle de lubrification, des pièces mécaniques à l'intérieur du carter peuvent se dilater et ne plus travailler sur leurs zones de fonctionnement théoriques et des bagues et joints d'étanchéité peuvent se déformer. Les situations de vie durant lesquelles la boite de vitesses chauffe sont par exemple les décollages répétitifs, lors de passages de forts couples dans la boite de vitesses (accélération), les décollages en pentes, en roulage rampant et lors de changement de rapports répétitifs. Les sources de chaleur d'une boite de vitesses sont multiples : cisaillement de l'huile par l'engrènement des pignons, les frottements des disques d'embrayage et la chaleur rayonnée par le moteur thermique. Par ailleurs, quand l'huile de lubrification des pignons et roulements de la boite de vitesses est la même que l'huile d'embrayage, la montée en température de l'huile de boite de vitesses est plus rapide.

Pour éviter une montée en température, des boites de vitesses comprennent des systèmes de refroidissement de l'huile de lubrification, tel un circuit hydraulique de refroidissement baignant dans le carter. Toutefois, il est préférable de réduire le dimensionnement des systèmes de refroidissement pour éviter un surcoût des équipements et une augmentation de la masse du groupe motopropulseur. De plus, les contraintes d'intégration empêchent un surdimensionnement du système de refroidissement.

On connait le document brevet WO2012153198 A2 décrivant un procédé de protection thermique d'une boite de vitesses visant à empêcher une montée en température critique lors d'une phase de roulage rampant d'un véhicule automobile. Ce procédé consiste à mesurer la température d'huile de lubrification à l'intérieur du carter d'une boite de vitesses et à avertir le conducteur afin qu'il modifie sa conduite, en pilotant un déplacement du véhicule ou en positionnant le levier de vitesses sur une position neutre. Cependant, les mesures de protections dépendent entièrement de la conduite du conducteur, et bien que des voyants ou messages d'alertes lui sont transmis, il est courant que ce dernier ne modifie pas ou peu sa conduite.

On connait en outre du document de brevet US-B2-8827868 un procédé de refroidissement d'une transmission à double embrayage à plusieurs vitesses qui est couplée à un moteur à combustion interne dans un véhicule.

Il existe donc un besoin de palier les problèmes précités et d'améliorer les mesures de protection thermique d'une boite de vitesses et d'un dispositif d'embrayage.

Plus précisément, l'invention concerne un procédé de protection thermique d'une boite de vitesses pilotée pour un groupe motopropulseur de véhicule automobile, le groupe motopropulseur comprenant en outre un moteur thermique, un dispositif d'embrayage apte à coupler en transmission un arbre de sortie du moteur thermique et un arbre d'entrée de la boite de vitesses et une unité de contrôle de pilotage de la boite de vitesses et du dispositif d'embrayage, laquelle unité de contrôle est apte à estimer en continu une température à l'intérieur d'un carter du dispositif d'embrayage et/ou de la boite de vitesses. Selon l'invention, le procédé comporte successivement les étapes suivantes :

- en cas de détection par l'unité de contrôle d'une température estimée dépassant un premier seuil de protection, l'activation d'un premier mode de protection dans lequel au moins les consignes en régime et en couple du moteur thermique ont des valeurs réduites selon un premier coefficient de réduction par rapport aux consignes cibles respectives qui sont calculées en fonction de la consigne de volonté du conducteur pour l'exécution d'une phase de décollage du véhicule,

- en cas de détection par l'unité de contrôle d'une température estimée dépassant un deuxième seuil de protection supérieur au premier seuil de protection, l'activation d'un deuxième mode de protection comprenant au moins une commande d'inhibition d'un mode de roulage dit de roulage rampant pour l'exécution d'une phase de décollage, le mode de roulage rampant consistant à amorcer un déplacement du véhicule par transmission du couple moteur aux roues sans action d'un conducteur sur une pédale d'accélérateur.

Selon une variante, lorsque le premier mode de protection est activé et que le mode de roulage rampant est actif, les consignes de couple moteur sont réduites selon un deuxième coefficient de réduction par rapport à une consigne cible de couple calculée à partir de la volonté du conducteur.

Selon une variante, pour les situations de roulage hors phase de décollage du véhicule, lorsque le premier mode de protection est activé, les consignes de couple moteur sont réduites selon un troisième coefficient de réduction par rapport à la consigne cible de couple calculée à partir de la volonté du conducteur et, lorsque le deuxième mode de protection est activé, les consignes de couple moteur sont réduites selon un quatrième coefficient de réduction par rapport à la consigne cible de couple calculée à partir de la volonté du conducteur.

Selon une variante, le procédé comporte en outre, lorsque le deuxième mode de protection est activé, une commande d'inhibition d'une phase de glissement du dispositif d'embrayage de manière à piloter le dispositif d'embrayage en position ouverte et fermée seulement en fonction de la consigne de volonté du conducteur.

Selon une variante, la commande d'inhibition d'une phase de glissement est exécutée lors d'un passage de rapport de vitesses.

Selon une variante, le procédé comporte en outre, lorsque le deuxième mode de protection est activé, une commande d'activation d'une loi de changement de rapport de démultiplication prédéterminée pour la boite de vitesses, ladite loi étant configurée de manière à réduire la fréquence de changement des rapports de démultiplication.

Plus précisément, le déclenchement de changement montant de rapport d'au moins deux rapports de démultiplication est configuré à des valeurs supérieures à une valeur de protection de changement montant prédéterminée, et le déclenchement de changement descendant de rapport d'au moins deux rapports de démultiplication est configuré à des valeurs inférieures à une valeur de protection de changement descendant prédéterminée.

Selon une variante, le procédé comporte en outre, lorsque le deuxième mode de protection est activé, l'activation d'une fonction d'oscillation du couple transmis par le dispositif d'embrayage à la boite de vitesses de manière à alerter le conducteur du dépassement du deuxième seuil de protection.

Selon une variante, le procédé comporte en outre en cas de détection par l'unité de contrôle d'une température estimée dépassant un troisième seuil de protection supérieur au deuxième seuil de protection, l'activation d'un troisième mode de protection dans lequel le dispositif d'embrayage est commandé dans une position ouverte, et dans lequel un signal d'alerte est émis de manière à avertir le conducteur.

L'invention prévoit également un véhicule automobile comprenant un groupe motopropulseur comportant une boite de vitesses pilotée, un moteur thermique, un dispositif d'embrayage apte à coupler en transmission un arbre de sortie du moteur thermique et un arbre d'entrée de la boite de vitesses et une unité de contrôle de pilotage de la boite de vitesses et du dispositif d'embrayage. Selon l'invention l'unité de contrôle est configurée pour exécuter le procédé de protection thermique selon l'un quelconque des modes de réalisation précédents.

Grâce à l'invention, le protocole de protection prévoit des actions préventives de protection et d'alertes qui sont pilotées automatiquement, de manière à être imperceptibles par le conducteur dans un premier temps puis de manière à alerter le conducteur. Les premières actions permettent d'améliorer la protection thermique sans qu'il soit nécessaire de surdimensionner un circuit de refroidissement (en masse et consommation électrique notamment) et surtout sans qu'il soit nécessaire d'alerter le conducteur afin d'éviter une gêne pour le conducteur ou un ressenti de disfonctionnement du véhicule. Si ces premières mesures ne sont pas suffisantes, le procédé de protection prévoit ensuite un deuxième niveau de protection supérieur au cours duquel il sera cette fois averti.

D'autres avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente schématiquement un groupe motopropulseur de véhicule automobile configuré pour mettre en œuvre le procédé de protection selon l'invention ;
- la figure 2 est un organigramme représentant un algorithme du procédé de protection selon l'invention.

L'invention concerne les véhicules automobiles à motorisation thermique et les véhicules hybrides dont le groupe motopropulseur est équipé d'une boite de vitesses pilotée. On entend par une boite de vitesses pilotée, par exemple les boites de vitesses à changement de rapport automatique coopérant avec un embrayage piloté automatiquement par une unité de contrôle de pilotage, les boites de vitesses à double embrayage et les boites de vitesses à transmission continue variable. Plus précisément, l'invention a pour objet une fonction de protection thermique de la boite de vitesses mettant en oeuvre un procédé de protection exécuté par l'unité de contrôle.

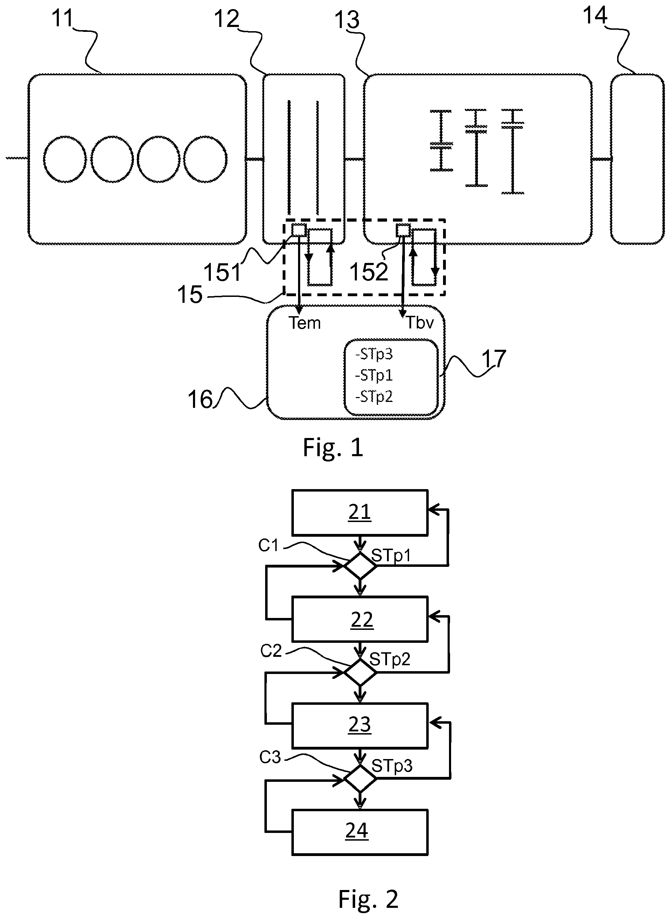

La figure 1 représente schématiquement un groupe motopropulseur de véhicule automobile apte à mettre en œuvre le procédé selon l'invention. Le groupe motopropulseur comporte une boite de vitesses pilotée 13, un moteur thermique 11, un dispositif d'embrayage 12 apte à coupler en transmission un arbre de sortie du moteur thermique 11 et un arbre d'entrée de la boite de vitesses 13 dont l'arbre de sortie est relié aux roues 14 du véhicule, et une unité de contrôle de pilotage 16 de la boite de vitesses et du dispositif d'embrayage.

Par ailleurs le groupe motopropulseur comporte des moyens de lubrification 15 de la boite de vitesses 13, plus précisément un circuit hydraulique d'un fluide de lubrification, de préférence une huile de lubrification. Dans ce mode de réalisation, le circuit hydraulique de lubrification 15 lubrifie à la fois le carter de la boite de vitesses 13 et alimente le dispositif d'embrayage 12 et comprend comme cela est bien connu de l'homme du métier des moyens de circulation de l'huile tels qu'une pompe hydraulique, des filtres, un bac et des vannes pilotées de régulation du fluide.

En outre, le groupe motopropulseur comporte des moyens d'estimation en continu 151, 152 de la température Tem à l'intérieur du dispositif d'embrayage 12 et de la température Tbv à l'intérieur du carter de la boite de vitesses 13 respectivement, de type capteurs de température.

Dans le cas d'un embrayage humide, les moyens d'estimation mesurent la température de l'huile de lubrification de manière à estimer la température des disques de friction au moyen par exemple d'abaques de température prédéterminés en conception et essais du véhicule et enregistrés en mémoire de l'unité de contrôle 16. Dans le cas d'un embrayage de type sec, les moyens d'estimation mesurent la température de l'air dans le carter d'embrayage de manière à estimer la température des disques de friction au moyen par exemple d'abaques de température prédéterminés et enregistrés en mémoire de l'unité de contrôle 16. Dans le cas d'une boite de vitesses à double embrayage, il est envisageable que le groupe motopropulseur soit équipé d'un capteur de température spécifique pour chaque embrayage.

Par ailleurs, l'unité de contrôle 16 de la boite de vitesses 13 et du dispositif d'embrayage 12 comprend un moyen de protection thermique 17 configuré par des paramètres de seuils de protection prédéterminés STp1, STp2, qui sont enregistrés en mémoire de l'unité de contrôle de manière à piloter au moins deux modes de protection.

Plus précisément, chacun des seuils de protection STp1, STp2 correspond à un niveau de températures de référence de l'huile de la boite de vitesses 13 et/ou à un niveau de température de référence de l'huile ou de l'air du dispositif d'embrayage 12. Les seuils de protection STp1, STp2 sont déterminés à partir d'un ou plusieurs seuils critiques de température STp3 de la boite de vitesses et de l'embrayage qui ont été déterminés en conception du véhicule. Plus précisément, lorsque la température du fluide de lubrification a atteint une valeur supérieure aux seuils critiques STp3, il a été constaté un début de détérioration irréversible de la boite de vitesses 13 et du dispositif d'embrayage 12.

Le moyen de protection 17 a pour objectif d'empêcher une montée en température atteignant ces seuils critiques. Les seuils de protection STp1, STp2 et les seuils critiques STp3 dépendent notamment de l'architecture de la boite de vitesses et des matériaux utilisés, et sont estimés en procédure de test sur bancs. A titre d'indication non limitative, il a été déterminé pour un type de boite de vitesses de véhicule automobile que les seuils de protection et le seuil critique pour la température de friction des disques d'embrayage sont compris entre 200° et 300° environ et pour la température de l'huile de lubrification de la boite de vitesses entre 100° et 150° environ.

A titre informatif, le seuil critique STp3 du dispositif d'embrayage est déterminé en commandant des phases de glissement répétitives et prolongées jusqu'à observer une chute du couple transmis et au-delà duquel il a été observé des dégradations de fonctionnement irréversibles. Le seuil critique STp3 de la boite de vitesse est choisi en prenant en compte la température la plus faible parmi les températures à partir de laquelle l'huile ne remplit plus le cahier des charges et les limites des composants de la boite de vitesses lubrifiés par l'huile (synchroniseurs, goulottes, roulements, joints d'étanchéité...)

Dans un mode de réalisation préférentiel, le moyen de protection thermique 17 est configuré pour piloter au moins deux modes de protection thermique dont le déclenchement est activé en fonction des températures estimées Tem, Tbv et des seuils de protection intermédiaires STp1, STp2 de température, dans lequel le seuil STp2 est supérieur au seuil STp1. Le premier mode de protection déclenché en fonction du premier seuil STp1 a pour objectif de limiter la montée en température tout en appliquant des actions de protection imperceptibles pour le conducteur. Le deuxième mode de protection déclenché en fonction du deuxième seuil STp2 a pour objectif de limiter la montée en température par des actions de protection et des actions d'alerte destinées à informer le conducteur.

De plus, le procédé comporte de préférence un troisième mode de protection final qui est destiné à mettre fin à la transmission de couple entre le moteur thermique et la boite de vitesses lorsqu'un des seuils critiques STp3 a été dépassé de manière à refroidir la boite de vitesses et avertir le conducteur. Le seuil STp3 est supérieur au seuil STp2.

Selon une variante, les seuils de protection STp1, STp2 (de boite de vitesses et/ou embrayage) sont calculés en fonction du troisième seuil de protection critique STp3 (de boite de vitesses et/ou embrayage). Selon une variante de configuration du procédé de protection, le seuil STp1 est calculé en multipliant le seuil de protection critique STp3 par un premier coefficient de protection k1, où STp1 = k1^{∗}STp3, Stp1 et STp3 étant des niveaux de température et k1 étant compris entre 0,8 et 0,87, et de préférence 0,85. Le seuils STp2 sont calculés en multipliant le seuil de protection critique STp3 par un deuxième coefficient de protection k2, où STp2=K2^{∗}STp3, STp2 étant un niveau de température et k2 étant compris entre 0,87 et 0,92, et de préférence 0,9.

Les modes de protection visent à piloter des actions de protection et prévention de montée de la température par l'unité de contrôle de pilotage 16. Dans ce but, le moyen de protection 17 comporte des moyens de commande de la boite de vitesses, du dispositif d'embrayage et du moteur thermique, notamment pour émettre des consignes de couple transmissible et de position de l'embrayage (ouvert, fermé, glissement), des consignes de couple moteur au moteur thermique, des consignes et/ou commandes de configuration de passage des rapports de vitesses. Pour la mise en œuvre du procédé de protection, le moyen de protection est apte à réduire les valeurs des consignes en régime et en couple du moteur thermique, à empêcher un état de glissement de l'embrayage, à inhiber le mode de roulage rampant, à activer une loi de changement de rapport de démultiplication prédéterminée et enregistrée en mémoire de l'unité de contrôle 16 et à activer une fonction d'oscillation du couple transmis par l'embrayage à la boite de vitesses.

La figure 2 représente un algorithme du procédé de protection thermique de la boite de vitesses pilotées comprenant dans cette variante préférentielle trois modes de protection au cours desquels les actions de protection sont pilotées de manière à empêcher et prévenir une montée en température de la boite de vitesses et du dispositif d'embrayage. L'unité de contrôle de pilotage de la boite de vitesses est un dispositif de calcul (calculateur) à circuits intégrés comprenant des moyens pour l'exécution du procédé de protection (calculateur, mémoires, bus de communication pour l'envoi de consignes, programme d'exécution du procédé, etc.).

Dans une étape initiale 21, la boite de vitesses et le dispositif d'embrayage fonctionnent dans des conditions normales de température, c'est-à-dire que la température estimée à l'intérieur de la boite de vitesses et du dispositif d'embrayage est inférieure au premier seuil de protection STp1. Lors de l'étape initiale 21, aucune action de protection thermique n'est active. On rappelle que l'unité de contrôle de la boite de vitesse estime en continu la température Tbv et la température Tem. Le procédé consiste à vérifier en continu la température estimée par rapport aux seuils de protections STp1, STp2 et les seuils critiques STp3 lors d'étapes de surveillance de température C1, C2, C3. Tant que la température estimée Tbv et/ou la température estimée Tem est inférieure au premier seuil de protection STp1, le procédé de protection reste à l'étape initiale 21.

Le procédé comporte, en cas de détection par l'unité de contrôle d'une température estimée Tbv et/ou Tem dépassant le premier seuil de protection STp1, l'activation du premier mode de protection 22. Lorsque ce premier mode de protection est actif, des actions de protection imperceptibles par le conducteur sont pilotées de manière à limiter une montée en température. A ce stade du procédé, l'unité de contrôle ne génère pas de message d'alerte à destination du conducteur.

Ce premier mode de protection 22 comporte au moins une première action de protection selon laquelle les consignes en régime et en couple du moteur thermique ont des valeurs réduites selon un premier coefficient de réduction R1 par rapport aux consignes cibles respectives qui sont calculées en fonction de la consigne de volonté du conducteur pour l'exécution d'une phase de décollage du véhicule.

Cette première action préventive vise à réduire la montée en température lors des phases de décollage. De préférence, le premier coefficient de réduction R1 réduit d'environ 20% à 30% les consignes de régime et/ou couple moteur par rapport aux consignes cibles calculée en condition normale de roulage lors d'une phase de décollage du véhicule. Ce niveau de réduction est choisi pour être imperceptible par le conducteur lors de son application.

On rappelle que la consigne de volonté du conducteur pour la phase de décollage est calculée par une unité de contrôle du moteur thermique en fonction de la position de la pédale d'accélérateur et/ou de la pédale de frein (par exemple si un mode de roulage rampant est actif) pour amorcer le déplacement du véhicule. On entend par roulage rampant (ou « creep mode » en anglais »), un mode de fonctionnement de la boite de vitesses et du dispositif d'embrayage consistant à amorcer un déplacement du véhicule à faible vitesse par transmission du couple moteur aux roues sans action d'un conducteur sur une pédale d'accélérateur. L'accélération du véhicule est déterminée en fonction uniquement de la position de la pédale de frein.

De préférence, le procédé comporte une deuxième action de protection lorsque le premier mode de protection 22 est activé, et que le mode de roulage rampant est actif. Dans cette situation, les consignes de couple moteur sont réduites selon un deuxième coefficient de réduction R2 par rapport à une consigne cible de couple calculée à partir de la volonté du conducteur. La consigne cible de couple est la consigne calculée par le calculateur du moteur thermique pour l'exécution du roulage rampant. De préférence, le deuxième coefficient de réduction R2 réduit d'environ 20% à 30% les consignes de régime et/ou couple moteur par rapport aux consignes cibles.

Ensuite, en cas de détection par l'unité de contrôle d'une température estimée dépassant le deuxième seuil de protection STp2 lors de l'étape de surveillance C2, le procédé comporte l'activation du deuxième mode de protection 23 comprenant au moins une commande d'inhibition du mode de roulage dit de roulage rampant pour l'exécution d'une phase de décollage. Comme cela est connu, la fonction de roulage rampant est génératrice de chaleur à l'intérieur du dispositif d'embrayage et de la boite de vitesses et le procédé évite ainsi cette situation de roulage.

Il est prévu que l'unité de contrôle génère un signal d'alerte à destination du conducteur (via un voyant ou message au niveau du tableau de bord) lorsque le deuxième mode de protection est activé. D'autres actions de protection peuvent être prévues et décrites ci-après.

Afin d'éviter la montée en température résultant d'une situation de patinage de l'embrayage, lorsque le deuxième mode de protection 23 est activé, le procédé comporte une commande d'inhibition d'une phase de glissement du dispositif d'embrayage de manière à piloter le dispositif d'embrayage uniquement en position ouverte ou fermée en fonction de la consigne de volonté du conducteur.

En particulier, l'inhibition du glissement est active lors d'un changement de rapport de vitesse. Les passages de rapports s'exécuteront alors en chocs pour éviter une phase de glissement génératrice de chaleur, les chocs ayant de plus pour effet supplémentaire d'alerter le conducteur. Plus précisément, la pente de la courbe de montée en pression du fluide hydraulique destiné à exercer une pression sur le ou les disque(s) d'embrayage est augmentée, ou pour un embrayage sec la pente de la courbe de positionnement des actionneurs électriques d'embrayage est augmentée.

En outre, une action de protection prévoit de réduire la fréquence de changement des rapports de vitesses lors du roulage. A cet effet, le moyen de protection modifie les lois de passages de rapports qui sont configurées par défaut pour la situation de roulage et le mode de roulage actif (mode économique, sportif, etc..). A cet effet, le moyen de protection active une loi de changement de rapport de démultiplication prédéterminée améliorant la protection thermique en réduisant la fréquence de changement de rapport.

La loi de changement de rapport activée est configurée de manière que les valeurs prédéterminées de déclenchement de changement montant de rapport de tous les rapports de démultiplication sont configurées à des valeurs supérieures à une valeur de protection de changement montant, et les valeurs prédéterminées de déclenchement de changement descendant de rapport de tous les rapports de démultiplication sont configurées à des valeurs inférieures à une valeur de protection de changement descendant. De cette loi de passage activée, il résulte que le moyen de protection empêche un changement de rapport montant tant que le régime moteur est inférieur à la valeur de protection de changement montant, par exemple pour un régime du moteur thermique égal à environ 3000 tr/min et empêche un changement de rapport descendant tant que le régime moteur est supérieur à la valeur de protection de changement descend, par exemple pour un régime du moteur thermique égal à environ 1000 tr/min.

Dans une variante, il est envisageable de modifier les lois de changement d'un ou deux rapports de démultiplication seulement (par exemple parmi le deuxième, troisième et quatrième rapport uniquement) pour lesquels il a été constaté que la montée en température est susceptible de se produire le plus souvent.

De préférence, pour avertir le conducteur d'une montée en température, le procédé comporte une action d'alerte par le moyen de protection de l'unité de contrôle pilotant une oscillation du couple transmis par le dispositif d'embrayage. A cet effet, lorsque le deuxième mode de protection 23 est activé, le procédé comporte l'activation d'une fonction d'oscillation du couple transmis par le dispositif d'embrayage à la boite de vitesses, dont l'amplitude et la fréquence sont déterminées et enregistrées dans une mémoire de l'unité de commande. Plus précisément, la fonction d'oscillation est adaptée pour faire osciller le couple transmis par le dispositif d'embrayage à la boite de vitesses autour d'un couple mesuré, par exemple à l'instant d'activation du deuxième mode de protection 23, lorsque la température estimée dépasse le deuxième seuil de protection.

La fonction d'oscillation est mise en œuvre par exemple en commandant une oscillation au circuit hydraulique de commande de la pression exercée sur le ou les disque(s) du dispositif d'embrayage, notamment la commande de fluide hydraulique destinée à exercer la pression sur le ou les disques. Dans le cas d'un embrayage sec, la fonction d'oscillation est mise en œuvre en commandant une oscillation au circuit d'actionneurs électriques ou hydrauliques de commande de la pression exercée sur le ou les disques du dispositif d'embrayage. La fréquence d'oscillation est comprise de préférence entre 0,5 et 10 Hertz.

En outre, afin de limiter la montée en température le procédé prévoit une réduction graduelle du couple moteur en fonction de la température estimée pour les situations de roulage hors phase de décollage. Plus précisément, lorsque le premier mode de protection 22 est activé, les consignes de couple moteur sont réduites selon un troisième coefficient de réduction R3 par rapport à la consigne cible de couple calculée à partir de la volonté du conducteur et, lorsque le deuxième mode de protection 23 est activé, les consignes de couple moteur sont réduites selon un quatrième coefficient de réduction R4 par rapport à la consigne cible de couple calculée à partir de la volonté du conducteur. De préférence, le coefficient de réduction R3 pilote une réduction de couple de 20% et 30% et le coefficient R4 pilote une réduction de couple compris entre 40% et 60%. Il est envisageable que les premier, deuxième et troisième coefficients de réduction R1, R2, R3 soient différents et compris dans la même plage de valeur comprise entre 20% et 30%.

Finalement, en cas de détection par l'unité de contrôle d'une température estimée dépassant le troisième seuil de protection STp3, le dispositif d'embrayage est commandé dans une position ouverte, et un signal d'alerte est émis de manière à avertir le conducteur (via un voyant ou message au tableau de bord). La position ouverte est maintenue tant que la température estimée est supérieure au troisième seuil de protection STp3 critique. Le conducteur a alors la possibilité de freiner et de se garer ou de laisser filer le véhicule. Toutefois, cette situation d'extrême urgence ne devrait pas se produire, ou seulement dans des situations exceptionnelles pour éviter une détérioration irréversible de la boite de vitesses. Il est très probable que le premier mode de protection et le deuxième mode de protection ait pu empêcher une telle situation.

## Revendications

1. Procédé de protection thermique d'une boite de vitesses pilotée (13) pour un groupe motopropulseur de véhicule automobile, le groupe motopropulseur comprenant en outre un moteur thermique (11), un dispositif d'embrayage (12) apte à coupler en transmission un arbre de sortie du moteur thermique et un arbre d'entrée de la boite de vitesses et une unité de contrôle (16) de pilotage de la boite de vitesses et du dispositif d'embrayage, laquelle unité de contrôle est apte à estimer en continu une température à l'intérieur d'un carter du dispositif d'embrayage et/ou de la boite de vitesses, **caractérisé en ce qu'**il comporte successivement les étapes suivantes :
- en cas de détection par l'unité de contrôle (16) d'une température estimée dépassant un premier seuil de protection (STp1), l'activation d'un premier mode de protection (22) dans lequel au moins les consignes en régime et en couple du moteur thermique (11) ont des valeurs réduites selon un premier coefficient de réduction par rapport aux consignes cibles respectives qui sont calculées en fonction de la consigne de volonté du conducteur pour l'exécution d'une phase de décollage du véhicule,
- en cas de détection par l'unité de contrôle d'une température estimée dépassant un deuxième seuil de protection (STp2) supérieur au premier seuil de protection (STp1), l'activation d'un deuxième mode de protection (23) comprenant au moins une commande d'inhibition (23) d'un mode de roulage dit de roulage rampant pour l'exécution d'une phase de décollage, le mode de roulage rampant consistant à amorcer un déplacement du véhicule à par transmission du couple moteur aux roues sans action d'un conducteur sur une pédale d'accélérateur.

2. Procédé selon la revendication 1, **caractérisé en ce que**, lorsque le premier mode de protection (22) est activé et que le mode de roulage rampant est actif, les consignes de couple moteur sont réduites selon un deuxième coefficient de réduction par rapport à une consigne cible de couple calculée à partir de la volonté du conducteur.

3. Procédé selon la revendication 1 ou 2, **caractérisé en ce que**, pour les situations de roulage hors phase de décollage du véhicule, lorsque le premier mode de protection (22) est activé, les consignes de couple moteur sont réduites selon un troisième coefficient de réduction par rapport à la consigne cible de couple calculée à partir de la volonté du conducteur et, lorsque le deuxième mode de protection (23) est activé, les consignes de couple moteur sont réduites selon un quatrième coefficient de réduction par rapport à la consigne cible de couple calculée à partir de la volonté du conducteur.

4. Procédé selon l'une quelconque des revendications 1 à 3, **caractérisé en ce qu'**il comporte en outre, lorsque le deuxième mode de protection (23) est activé, une commande d'inhibition d'une phase de glissement du dispositif d'embrayage (12) de manière à piloter le dispositif d'embrayage en position ouverte et fermée seulement en fonction de la consigne de volonté du conducteur.

5. Procédé selon la revendication 4, **caractérisé en ce que** la commande d'inhibition d'une phase de glissement est exécutée lors d'un passage de rapport de vitesses.

6. Procédé selon l'une quelconque des revendications 1 à 5, **caractérisé en ce qu'**il comporte en outre, lorsque le deuxième mode de protection (23) est activé, une commande d'activation d'une loi de changement de rapport de démultiplication prédéterminée pour la boite de vitesses, ladite loi étant configurée de manière à réduire la fréquence de changement des rapports de démultiplication.

7. Procédé selon la revendication 6, **caractérisé en ce que** le déclenchement de changement montant de rapport d'au moins deux rapports de démultiplication est configuré à des valeurs supérieures à une valeur de protection de changement montant prédéterminée, et le déclenchement de changement descendant de rapport d'au moins deux rapports de démultiplication est configuré à des valeurs inférieures à une valeur de protection de changement descendant prédéterminée.

8. Procédé selon l'une quelconque des revendications 1 à 7, **caractérisé en ce qu'**il comporte en outre, lorsque le deuxième mode de protection est activé, l'activation d'une fonction d'oscillation du couple transmis par le dispositif d'embrayage à la boite de vitesses de manière à alerter le conducteur du dépassement du deuxième seuil de protection.

9. Procédé selon l'une quelconque des revendication 1 à 8, **caractérisé en ce qu'**il comporte en outre en cas de détection par l'unité de contrôle d'une température estimée dépassant un troisième seuil de protection supérieur au deuxième seuil de protection, l'activation d'un troisième mode de protection dans lequel le dispositif d'embrayage est commandé dans une position ouverte, et dans lequel un signal d'alerte est émis de manière à avertir le conducteur.

10. Véhicule automobile comprenant un groupe motopropulseur comportant une boite de vitesses pilotée, un moteur thermique, un dispositif d'embrayage apte à coupler en transmission un arbre de sortie du moteur thermique et un arbre d'entrée de la boite de vitesses et une unité de contrôle de pilotage de la boite de vitesses et du dispositif d'embrayage, **caractérisé en ce que** l'unité de contrôle est configurée pour exécuter le procédé de protection thermique selon l'une quelconque des revendications précédentes.

## Patentansprüche

1. Verfahren zum thermischen Schutz eines gesteuerten Getriebes (13) für einen Kraftfahrzeugantriebsstrang, wobei der Antriebsstrang ferner eine Wärmekraftmaschine (11), eine Kupplungsvorrichtung (12), die eine Welle im Getriebe koppeln kann, einen Ausgang der Wärmekraftmaschine und einen Eingang umfasst Welle des Getriebes und eine Steuereinheit (16) zum Steuern des Getriebes und der Kupplungsvorrichtung, wobei die Steuereinheit in der Lage ist, eine Temperatur innerhalb eines Gehäuses der Kupplungsvorrichtung und/oder des Getriebes kontinuierlich abzuschätzen, **dadurch gekennzeichnet, dass** sie nacheinander umfasst: die folgenden Schritte :
- bei Erkennen einer geschätzten Temperatur, die eine erste Schutzschwelle (STp1) überschreitet, durch die Steuereinheit (16) die Aktivierung eines ersten Schutzmodus (22), bei dem mindestens die Sollwerte im Betriebsmodus und im Drehmoment von die Wärmekraftmaschine (11) gemäß einem ersten Reduktionskoeffizienten gegenüber den jeweiligen Soll-Sollwerten reduzierte Werte aufweisen, die in Abhängigkeit vom Fahrerwunsch-Sollwert für die Durchführung einer Startphase des Fahrzeugs berechnet werden,
- im Falle einer Erfassung durch die Steuereinheit, dass eine geschätzte Temperatur eine zweite Schutzschwelle (STp2) überschreitet, die größer als die erste Schutzschwelle (STp1) ist, die Aktivierung eines zweiten Schutzmodus (23), der mindestens einen Sperrbefehl umfasst (23) eines sogenannten Kriechrollmodus zur Durchführung einer Startphase, wobei der Kriechrollmodus darin besteht, eine Bewegung des Fahrzeugs durch Übertragung des Motordrehmoments auf die Räder ohne Betätigung eines Fahrpedals durch den Fahrer einzuleiten.

2. Verfahren nach Anspruch 1, **dadurch gekennzeichnet, dass** bei aktiviertem ersten Schutzmodus (22) und aktivem Kriechfahrmodus die Motordrehmoment-Sollwerte nach einem zweiten Reduktionskoeffizienten gegenüber einem aus der berechneten Solldrehmoment-Sollwert reduziert werden Willen des Fahrers.

3. Verfahren nach Anspruch 1 oder 2, **dadurch gekennzeichnet, dass** für Fahrsituationen außerhalb der Startphase des Fahrzeugs bei Aktivierung des ersten Schutzmodus (22) die Motordrehmoment-Sollwerte nach einem dritten Reduktionskoeffizienten bezüglich reduziert werden auf den aus dem Fahrerwunsch berechneten Soll-Momentensollwert und bei Aktivierung des zweiten Schutzmodus (23) werden die Motordrehmoment-Sollwerte nach einem vierten Reduktionskoeffizienten gegenüber dem aus dem Fahrerwillen berechneten Soll-Momentensollwert reduziert.

4. Verfahren nach einem der Ansprüche 1 bis 3, **dadurch gekennzeichnet, dass** es ferner bei Aktivierung des zweiten Schutzmodus (23) einen Befehl zum Sperren einer Rutschphase der Kupplungsvorrichtung (12) umfasst, um die Kupplung zu steuern in geöffneter und geschlossener Stellung nur auf Wunsch des Fahrers.

5. Verfahren nach Anspruch 4, **dadurch gekennzeichnet, dass** die Steuerung zum Unterbinden einer Rutschphase während eines Gangwechsels durchgeführt wird.

6. Verfahren nach einem der Ansprüche 1 bis 5, **dadurch gekennzeichnet, dass** es ferner bei Aktivierung des zweiten Schutzmodus (23) einen Befehl zum Aktivieren eines vorgegebenen Übersetzungsverhältnis-Wechselgesetzes für das Getriebe umfasst, wobei das Gesetz so konfiguriert ist: um die Wechselhäufigkeit der Übersetzungsverhältnisse zu reduzieren.

7. Verfahren nach Anspruch 6, **dadurch gekennzeichnet, dass** der Auslöser zum Hochschalten von mindestens zwei Übersetzungen auf Werte größer als ein vorgegebener Hochschaltschutzwert eingestellt wird und das Auslösen des Herunterschaltens von mindestens zwei Übersetzungen konfiguriert wird auf Werte kleiner als ein vorgegebener Rückschaltschutzwert.

8. Verfahren nach einem der Ansprüche 1 bis 7, **dadurch gekennzeichnet, dass** es ferner bei Aktivierung des zweiten Schutzmodus die Aktivierung einer Oszillationsfunktion des von der Kupplungsvorrichtung übertragenen Drehmoments auf das Getriebe umfasst, um den Treiber, wenn die zweite Schutzschwelle überschritten wird.

9. Verfahren nach einem der Ansprüche 1 bis 8, **dadurch gekennzeichnet, dass** es im Falle einer Erfassung einer geschätzten Temperatur durch die Steuereinheit, die eine dritte Schutzschwelle überschreitet, die größer als die zweite Schutzschwelle ist, ferner die Aktivierung eines dritten Modus von umfasst Schutz, bei dem die Kupplungsvorrichtung in eine Offenstellung gesteuert wird und bei dem ein Warnsignal ausgegeben wird, um den Fahrer zu warnen.

10. Kraftfahrzeug, umfassend einen Antriebsstrang, umfassend ein gesteuertes Getriebe, eine Wärmekraftmaschine, eine Kupplungsvorrichtung, die eine Ausgangswelle der Wärmekraftmaschine und eine Eingangswelle des Getriebes in einem Getriebe koppeln kann, und eine Einheit Kupplungsvorrichtung, **dadurch gekennzeichnet, dass** die Steuereinheit dazu konfiguriert ist, das Wärmeschutzverfahren nach einem der vorhergehenden Ansprüche auszuführen.

## Claims

1. Method of thermal protection of a controlled gearbox (13) for a motor vehicle powertrain, the powertrain further comprising a heat engine (11), a clutch device (12) capable of coupling a shaft in transmission output of the heat engine and an input shaft of the gearbox and a control unit (16) for controlling the gearbox and the clutch device, which control unit is able to continuously estimate a temperature inside a housing of the clutch device and / or of the gearbox, **characterized in that** it successively comprises the following steps :
- in the event of detection by the control unit (16) of an estimated temperature exceeding a first protection threshold (STp1), the activation of a first protection mode (22) in which at least the set points in operating mode and in torque of the heat engine (11) have reduced values according to a first reduction coefficient with respect to the respective target setpoints which are calculated as a function of the driver's desire setpoint for the execution of a take-off phase of the vehicle,
- in the event of detection by the control unit of an estimated temperature exceeding a second protection threshold (STp2) greater than the first protection threshold (STp1), the activation of a second protection mode (23) comprising at at least one inhibition command (23) of a so-called creeping taxiing mode for the execution of a take-off phase, the creeping taxiing mode consisting in initiating a movement of the vehicle by transmitting the engine torque to the wheels without action of a driver on an accelerator pedal.

2. Method according to claim 1, **characterized in that**, when the first protection mode (22) is activated and the creeping driving mode is active, the engine torque setpoints are reduced according to a second reduction coefficient with respect to a setpoint torque target calculated from the driver's will.

3. Method according to claim 1 or 2, **characterized in that**, for driving situations outside the take-off phase of the vehicle, when the first protection mode (22) is activated, the engine torque setpoints are reduced according to a third reduction coefficient with respect to the target torque setpoint calculated from the driver's wishes and, when the second protection mode (23) is activated, the engine torque setpoints are reduced according to a fourth reduction coefficient with respect to the target setpoint of torque calculated from the will of the driver.

4. Method according to any one of claims 1 to 3, **characterized in that** it further comprises, when the second protection mode (23) is activated, a command to inhibit a sliding phase of the clutch device (12) so as to control the clutch device in the open and closed position only as a function of the driver's wish instruction.

5. Method according to claim 4, **characterized in that** the control for inhibiting a sliding phase is carried out during a gear change.

6. Method according to any one of claims 1 to 5, **characterized in that** it further comprises, when the second protection mode (23) is activated, a command for activating a predetermined gear ratio change law for the gearbox, said law being configured so as to reduce the frequency of change of the gear ratios.

7. Method according to claim 6, **characterized in that** the trigger for upshifting of at least two gear ratios is set to values greater than a predetermined upshift protection value, and the triggering of downward gear change at least two gear ratios are configured to values less than a predetermined downshift protection value.

8. Method according to any one of claims 1 to 7, **characterized in that** it further comprises, when the second protection mode is activated, the activation of a function of oscillation of the torque transmitted by the clutch device to the gearbox so as to alert the driver if the second protection threshold is exceeded.

9. Method according to any one of claims 1 to 8, **characterized in that** it further comprises, in the event of detection by the control unit of an estimated temperature exceeding a third protection threshold greater than the second protection threshold, the activation of a third mode of protection in which the clutch device is controlled in an open position, and in which a warning signal is emitted so as to warn the driver.

10. Motor vehicle comprising a powertrain comprising a controlled gearbox, a heat engine, a clutch device capable of coupling in transmission an output shaft of the heat engine and an input shaft of the gearbox and a unit control control of the gearbox and of the clutch device, **characterized in that** the control unit is configured to execute the thermal protection method according to any one of the preceding claims.
